Europäisches Patentamt

European Patent Office (11) Numéro de publication : **0 076 204**

Office européen des brevets **B1**

(12) **FASCICULE DE BREVET EUROPÉEN**

(45) Date de publication du fascicule du brevet : **02.01.86**

(51) Int. Cl.⁴ : **G 21 C 11/02**, G 21 C 3/32

(21) Numéro de dépôt : **82401717.2**

(22) Date de dépôt : **22.09.82**

(54) **Dispositif de protection neutronique supérieure pour assemblage de réacteur nucléaire.**

(30) Priorité : **30.09.81 FR 8118413**

(43) Date de publication de la demande : **06.04.83 Bulletin 83/14**

(45) Mention de la délivrance du brevet : **02.01.86 Bulletin 86/01**

(84) Etats contractants désignés : **BE DE FR GB IT**

(56) Documents cités :
**DE-A- 2 019 271**
**FR-A- 1 462 237**
**GB-A- 1 410 332**
**US-A- 3 086 931**
**US-A- 3 239 424**
**US-A- 3 425 905**
**US-A- 3 975 233**
**ENERGIE NUCLEAIRE, vol. 14, no. 3, mai-juin 1972, pages 161-167, Paris (FR); J.M. YELLOWLEES et al.: "Assemblages de combustible pour réacteurs rapides refroidis au gaz"**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Loriot, Pierre Quartier Font Trompette F-13770 Venelles (FR)**
Inventeur : **Rendu, Michel La Grande Terrasse Impasse Sainte Eutrope F-13100 Aix en Provence (FR)**
Inventeur : **Rousseau, Jean Villa La Figuière 13, Avenue Saint Flenryval F-13100 Aix en Provence (FR)**

(74) Mandataire : **Mongrédien, André et al c/o BREVATOME 25, rue de Ponthieu F-75008 Paris (FR)**

EP 0 076 204 B1

## Description

La présente invention a pour objet un assemblage de réacteur nucléaire et plus particulièrement de réacteurs à neutrons rapides.

Dans de tels réacteurs, il est nécessaire de limiter l'activation du sodium secondaire qui traverse les échangeurs de chaleur et de diminuer les dommages sur les divers composants primaires, notamment sur les cuves du réacteur. La méthode la plus courante consiste à confiner les neutrons dans la région centrale du cœur, en plaçant à la périphérie de celui-ci des assemblages ne contenant que de la matière fertile afin d'absorber les neutrons et en disposant également de la matière fertile dans les parties supérieure et inférieure des assemblages combustibles, de part et d'autre de la matière fissile.

La protection est complétée par des manchons dits « de protection neutronique supérieure » disposés à la partie supérieure des assemblages.

Dans la plupart des systèmes actuels, chaque assemblage comprend, en partie haute, une tête en forme de manchon et, en partie basse, un pied, disposés de part et d'autre du corps d'assemblage. Le manchon présente une épaisseur plus importante que celle du corps d'assemblage et l'espace ménagé dans sa partie centrale permet la circulation du fluide de refroidissement, par exemple du sodium liquide, de bas en haut à travers l'assemblage. Or on sait que les assemblages nécessitent un renouvellement dans le cœur, s'effectuant à chaque campagne de chargement de ce dernier, selon l'irradiation subie. Chaque assemblage usé doit être retiré du cœur pour être envoyé dans une installation de retraitement où l'ensemble tête, corps d'assemblage et pied est séparé du faisceau des aiguilles. De ce fait, le manchon est à chaque fois perdu puisqu'il est solidaire du corps de l'assemblage. On a également proposé des dispositifs avec manchon démontable, mais ceux-ci ont encore une épaisseur de paroi importante, et les dispositifs de fixation sont parfois complexes, ce qui augmente le coût des appareils et complique le démontage.

La présente invention a justement pour objet un assemblage de réacteur nucléaire comportant un dispositif qui remédie à ces inconvénients en étant simple à réaliser et facilement démontable lors du démantèlement de l'assemblage irradié.

Selon la principale caractéristique le dispositif de protection neutronique situé à l'intérieur d'une paroi placée à la partie supérieure du corps d'assemblage comporte un récipient au moins partiellement rempli d'un produit absorbant les neutrons, maintenu à l'aide d'au moins une plaque entretoise, l'ensemble constitué par le récipient et les plaques entretoises étant situé à l'intérieur de ladite paroi.

Selon une autre caractéristique de l'invention, chacune des plaques entretoises précitées comprend un bord extérieur dont au moins une partie est sensiblement rectiligne et un bord intérieur dont au moins une partie épouse la forme dudit récipient.

Deux types de plaques entretoises sont utilisés dans le dispositif selon l'invention : les unes, dites « plaques entretoises mâles » se caractérisent en ce que leur partie supérieure dépasse le haut du corps d'assemblage, présente un bord extérieur incliné de haut en bas vers l'extérieur de la paroi entourant le dispositif et comporte une encoche s'ouvrant vers l'extérieur de ladite paroi et permettant l'accrochage d'un appareil de manutention. Les autres, dites « plaques entretoises femelles », affleurent le haut du corps d'assemblage et ont au moins une portion de la partie supérieure de leur bord intérieur inclinée de haut en bas vers l'intérieur de l'espace délimité par la paroi mentionnée ci-dessus et, toujours dans la partie supérieure de leur bord intérieur, une encoche s'ouvrant vers l'intérieur dudit espace et permettant également l'accrochage d'un appareil de manutention.

Ces deux types de plaques interdisent le bouchage, par inadvertance, d'un assemblage par un autre au cours de la manutention.

Enfin, selon un mode de réalisation particulier de l'invention, le dispositif comporte plusieurs récipients au moins partiellement remplis d'un produit absorbant les neutrons, chacun des récipients étant maintenu par une seule plaque entretoise.

D'autres caractéristiques et avantages de l'invention ressortiront de la description qui va suivre, donnée à titre d'exemple purement illustratif et nullement limitatif, en référence aux dessins annexés dans lesquels :

la figure 1 est une vue schématique représentant un assemblage de réacteur nucléaire à neutrons rapides avec à sa partie supérieure le dispositif selon l'invention,

la figure 2 est une vue schématique en perspective, partiellement éclatée, montrant le dispositif selon l'invention à l'intérieur de la paroi placée à la partie supérieure de l'assemblage,

la figure 3 est une vue schématique en perspective montrant séparément les différentes pièces qui constituent le dispositif de protection selon l'invention, dans le cas de plaques entretoises mâles,

la figure 4 est une vue schématique d'un dispositif selon l'invention équipé de plaques entretoises mâles et placé à l'intérieur d'une parois de forme hexagonale,

la figure 5 est une vue avec arrachement partiel montrant une forme particulière de réalisation du récipient contenant le produit absorbant les neutrons, et une plaque entretoise femelle,

la figure 6 est une vue semblable à la figure 4, montrant le dispositif selon l'invention équipé de plaques entretoises femelles et placé à l'intérieur d'une paroi de forme hexagonale,

les figures 7a et 7b sont des vues de dessus de la figure 6, montrant deux manières différentes de fixer les plaques entretoises sur une paroi hexagonale,

la figure 8 est une vue semblable à la figure 6, mais avec une paroi de forme circulaire, et

la figure 9 est une vue schématique en perspective avec arrachement partiel illustrant un mode particulier de réalisation dans lequel le dispositif comprend plusieurs récipients maintenus chacun par une seule plaque entretoise.

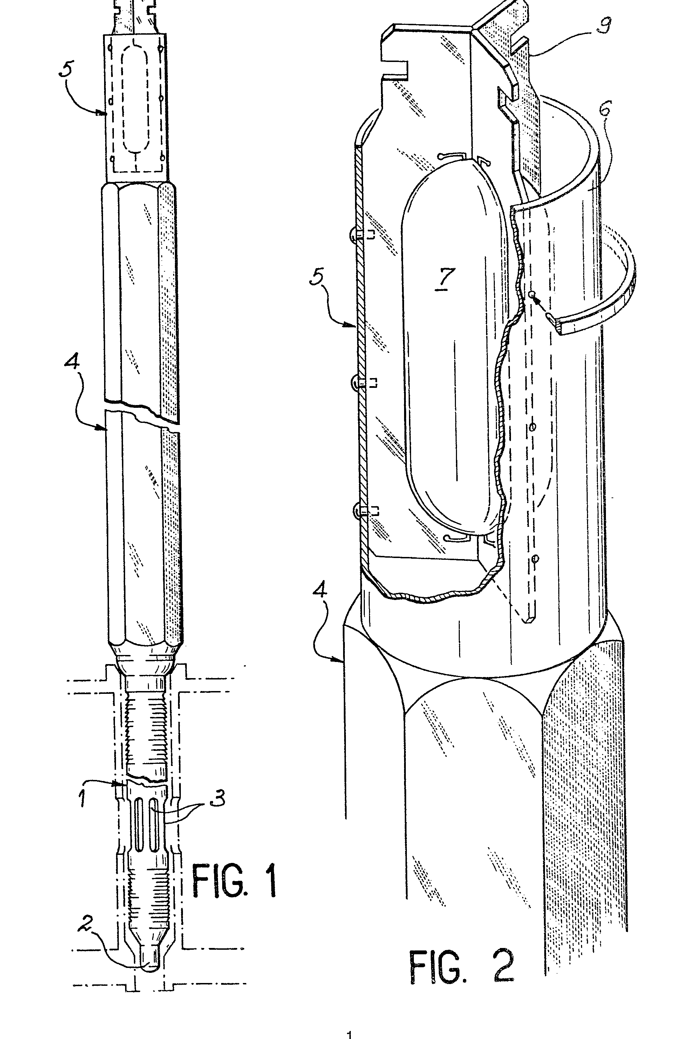

La figure 1 montre un assemblage pour réacteur à neutrons rapides qui se compose essentiellement de trois parties : le pied 1 dont l'extrémité inférieure 2 a une forme conique afin de pouvoir être positionné dans le fond de la cuve du réacteur. On voit également des ouvertures 3 par lesquelles pénètre le sodium liquide qui s'écoule ensuite de bas en haut à travers l'assemblage. Le corps 4 de celui-ci, contenant les aiguilles fissiles ou fertiles, est surmonté du dispositif 5 de protection neutronique selon l'invention.

Ce dernier apparaît mieux sur la figure 2. Sur cette figure, on voit que la partie supérieure du corps d'assemblage 4 est formée d'une paroi 6 de forme cylindrique. A l'intérieur de celle-ci se trouve un récipient 7 contenant un produit 8 capable d'absorber les neutrons, par exemple du carbure de bore, et maintenu à l'intérieur de la paroi 6 par 3 plaques entretoises 9 qui, dans l'exemple de la figure 2, sont des plaques entretoises mâles.

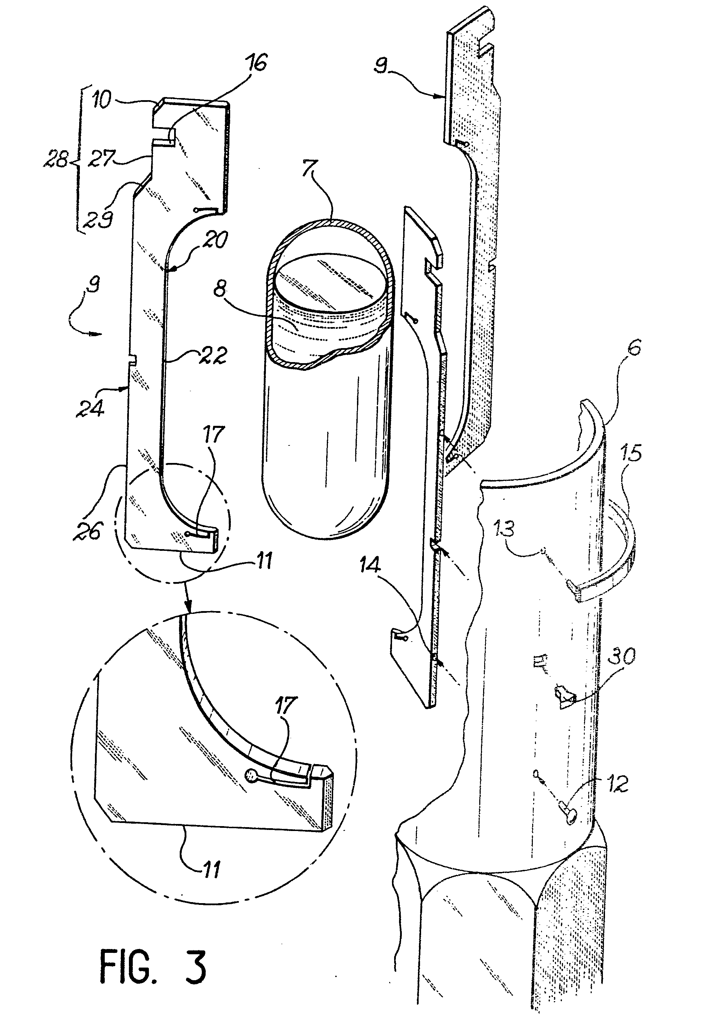

Les différentes pièces, ainsi que les modes de fixation des plaques entretoises sur la paroi 6 vont maintenant être décrits plus en détail en référence à la figure 3. Dans l'exemple représenté ici, le récipient 7 est maintenu par trois plaques entretoises 9. Celles-ci, qui peuvent avantageusement être en acier inoxydable, peuvent être obtenues de façon simple, par exemple par emboutissage de tôles laminées, par microfusion ou par matriçage à chaud notamment.

On voit sur la figure que chaque plaque 9 comprend un bord intérieur 20 dont une partie 22 se compose d'une portion rectiligne terminée par deux portions en quart de cercle afin d'épouser la forme du récipient 7, qui est un cylindre terminé par deux demi-sphères.

Quant au bord extérieur 24 de la plaque 9, il comporte une partie rectiligne 26 permettant la fixation de la plaque 9 sur la paroi 6. Quant à la partie supérieure 28 du bord extérieur 24, elle a une forme généralement inclinée de haut en bas vers l'extérieur de l'espace délimité par la paroi 6. Dans le cas particulier décrit ici, on distingue, de haut en bas :

un pan coupé 10 incliné vers l'extérieur, une partie verticale 27 entaillée par une encoche 16 s'ouvrant vers l'extérieur, et

un pan coupé 29, faisant la jonction avec la partie rectiligne 26 du bord extérieur 24.

Une fois que ces différentes plaques entretoises ont été disposées autour du récipient 7 et en contact avec celui-ci, elles sont rendues solidaires les unes des autres par exemple par soudure au point de jonction de leur partie supérieure 28 et éventuellement au point de jonction de leur partie inférieure 11.

L'ensemble ainsi constitué est ensuite introduit à l'intérieur de la paroi 6 et les entretoises 9 sont fixées à cette dernière. Cette opération peut se faire de plusieurs manières : on peut par exemple réaliser une fixation par cloutage à l'aide de clous spéciaux 12 introduits dans des trous 13 de la paroi 6 et des trous 14 préalablement percés sur la tranche de chaque entretoise dans la partie rectiligne du bord extérieur, la tête de chaque clou pouvant être soudée sur la paroi 6. On peut aussi utiliser des coins profilés 30 venant s'encastrer dans les plaques entretoises 9 et maintenus par soudure sur la paroi 6. Une troisième méthode consiste à déformer localement la paroi 6 de façon à créer des bosses qui pénètrent dans des encoches préalablement ménagées sur la tranche des plaques entretoises 9. Enfin, cette fixation peut être réalisée par cerclage à l'aide d'une ou plusieurs brides 15 entourant la paroi 6 et maintenues sur celle-ci par soudure. Cependant, si ces quatre méthodes sont les plus efficaces et les plus sûres, tout autre moyen de fixation peut être utilisé dans le cadre de la présente invention. Dans certains cas, les entretoises 9 peuvent être munies d'un système anti-vibrations qui se présente sous la forme de fentes 17 pratiquées dans la partie supérieure et/ou dans la partie inférieure de celles-ci. Une telle fente est représentée sur le détail agrandi de la figure 3.

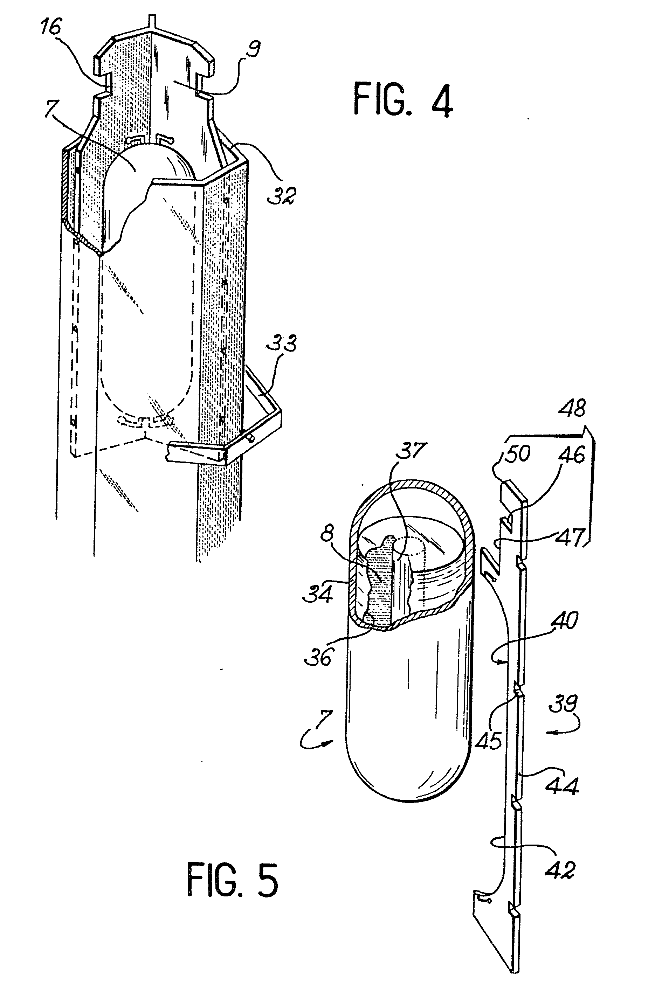

La figure 4 montre le dispositif placé à l'intérieur d'une paroi 32 de forme hexagonale et maintenu par cerclage à l'aide d'une bride hexagonale 33. Dans le cas où on utilise des plaques entretoises mâles, la partie supérieure de celles-ci dépasse le bord supérieur de la paroi 6. Cette disposition présente un double avantage : tout d'abord, elle permet l'accrochage du dispositif par un appareil de manutention grâce aux encoches 16. De plus, elle empêche le pied d'un autre assemblage de pénétrer à l'intérieur du dispositif de protection neutronique : si un tel incident se produisait, on risquerait de boucher le passage du sodium liquide à la partie supérieure de l'assemblage. Grâce à l'invention, ce risque est supprimé : le pied du deuxième assemblage est dévié par les plaques 9 et le sodium peut s'écouler par au moins l'un des espaces délimités par la paroi 32 et les plaques 9. Ainsi, même en cas d'arrêt accidentel des pompes de circulation, la chaleur peut être évacuée par les mouvements de convection naturelle à l'intérieur de la masse de sodium.

La figure 5 illustre le mode de réalisation préféré du récipient 7 utilisé dans l'invention et contenant le produit capable d'absorber les neutrons. On voit que le récipient 7 se compose essentiellement d'une enveloppe externe 34 en tôle d'inox, ayant la forme d'un cylindre dont les extrémités, qui peuvent être de forme conique ou hémisphérique, sont fermées. A l'intérieur de cette enveloppe externe est disposée une enveloppe interne 36, également en tôle d'inox, mais de faible épaisseur, incomplètement remplie de carbure de bore. Enfin, au centre de l'enveloppe interne, et sensiblement le long de son axe, se trouve un tube 37 pouvant se déformer sous l'effet du gonflement du carbure de bore et dont l'intérieur constitue un volume libre pour contenir l'hélium dégagé par le carbure de bore au cours de l'irradiation.

La figure 5 montre également une plaque entretoise femelle 39 utilisée dans le dispositif selon l'invention. Comme dans le cas de la plaque entretoise mâle 9 décrite en référence à la figure 3, on retrouve un bord extérieur 44 rectiligne muni d'entailles 45 permettant de fixer la plaque 39 sur une paroi telle que les parois 6 ou 32 et un bord intérieur 40 dont une partie 42 épouse la forme du récipient 7. Mais c'est la partie supérieure 48 du bord intérieur 40 qui présente une portion 50 inclinée de haut en bas vers l'intérieur du dispositif et suivi d'une partie verticale 47 dans laquelle est ménagée une encoche 46 permettant l'accrochage du dispositif au moyen d'un appareil de manutention.

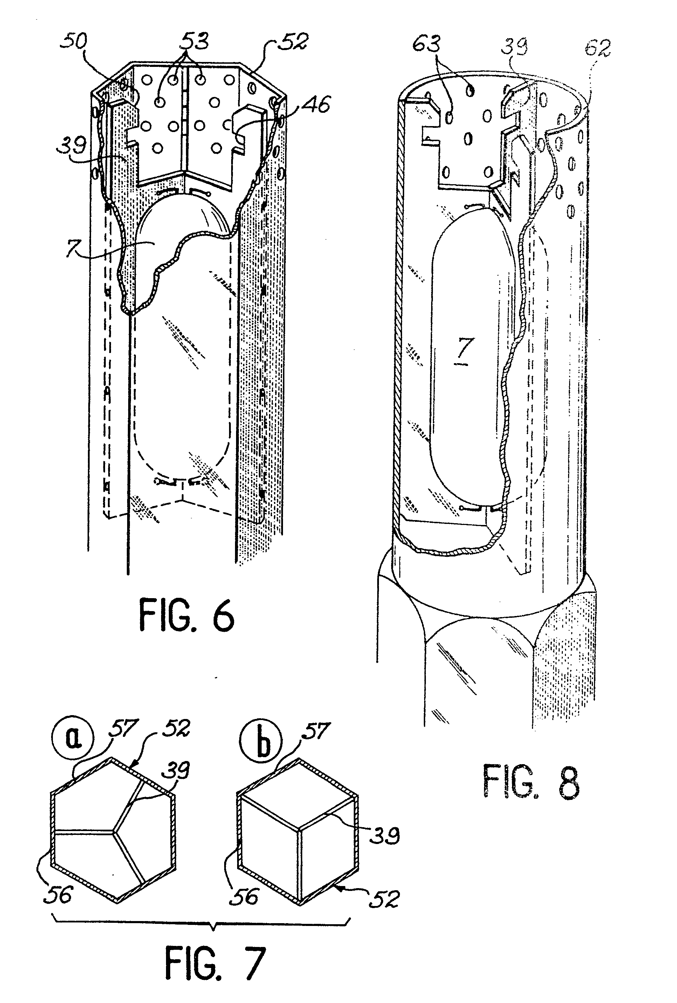

La figure 6 montre un dispositif équipé de plaques femelles 39 placé à l'intérieur d'une paroi 52 de forme hexagonale. On voit à l'examen de cette figure, que, dans le cas d'utilisation de plaques femelles, la partie supérieure de celles-ci affleure le bord supérieur de la paroi 52.

Cette disposition permet également l'accrochage du dispositif au moyen d'un appareil de manutention et, en cas de fausse manœuvre le pied d'un autre assemblage ne pénètre que partiellement à l'intérieur de la paroi 52 : le sodium liquide peut donc s'écouler dans les espaces délimités par le récipient 7, les plaques 39 et la paroi 52. Des trous 53 ménagés dans la partie supérieure de la paroi 52 peuvent améliorer l'évacuation du sodium liquide.

Les figures 7a et 7b illustrent les deux manières de disposer les entretoises pour les fixer sur une paroi hexagonale : on peut par exemple fixer la plaque 39 au milieu de la face 56 de la paroi 52 (figure 7a) ou bien à la jonction entre les faces 56 et 57 de ladite paroi (figure 7b).

La figure 8 montre un dispositif semblable à celui de la figure 6 placé dans une paroi 62 cylindrique. Comme on utilise encore des plaques femelles 39, la partie supérieure de celles-ci ne dépasse pas le bord supérieur de la paroi 62 qui peut, de même que la paroi 52 de la figure 6, être percée d'un certain nombre de trous 63 pour le passage du sodium liquide.

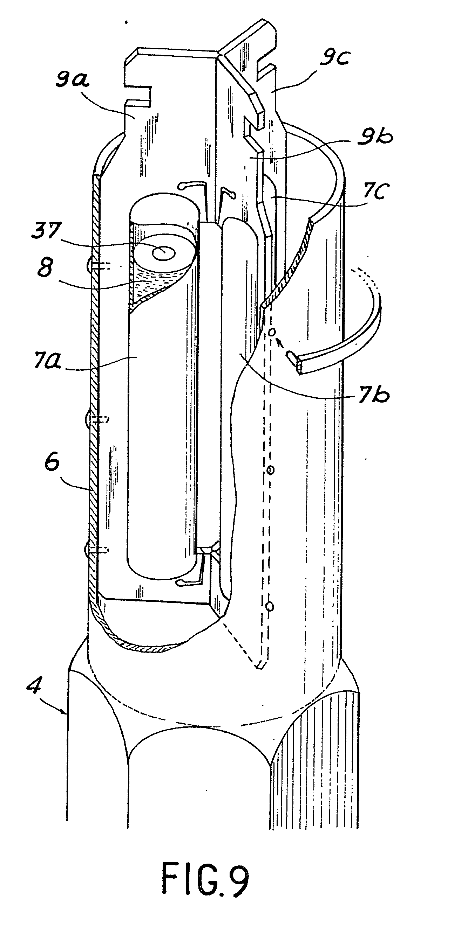

Enfin, la figure 9 illustre une variante dans laquelle le dispositif comporte plusieurs récipients contenant un produit absorbant les neutrons. On voit l'enveloppe cylindrique 6 fixée à la partie supérieure de l'assemblage 4 et à l'intérieur de laquelle se trouvent trois plaques entretoises 9a, 9b et 9c. Dans ce cas, il y a trois récipients 7a, 7b, 7c maintenus chacun par une seule plaque entretoise comme le récipient 7a dans la plaque 9a. Celui-ci est constitué de la même manière que le récipient 7 de la figure 5 avec le tube déformable 37 disposé au centre de la masse 8 de produit absorbant les neutrons.

Le dispositif de protection neutronique supérieure selon l'invention présente un certain nombre d'avantages intéressants et tout d'abord une fabrication simple, et d'autant plus économique que le gain en poids et en dimension est important par rapport aux dispositifs de l'art antérieur utilisant des manchons en acier de forte épaisseur. Le montage et le démontage sont très faciles, ce qui simplifie les opérations de maintenance, surtout lors du démantèlement d'assemblages irradiés. Les volumes de stockage, soit à la fabrication des assemblages, soit lors de leur démantèlement sont très réduits et on peut récupérer suivant les cas soit le dispositif complet, soit le récipient 7, soit le carbure de bore seul pour réemploi après désactivation.

Enfin, il est bien entendu que l'invention ne se limite pas aux seuls exemples de réalisation qui viennent d'être décrits mais qu'on peut envisager des variantes sans sortir pour autant du cadre de l'invention telle que délimité par la revendication 1.

C'est ainsi que l'homme de l'art pourra choisir, au mieux en fonction de chaque cas particulier, le nombre et la forme des entretoises, ainsi que leur procédé d'obtention, de même que le mode de fixation des plaques entretoises sur la paroi 6.

Quant au récipient 7, il peut contenir du carbure de bore ou tout autre produit présentant de bonnes propriétés absorbantes vis-à-vis des neutrons.

**Revendications**

1. Assemblage de réacteur nucléaire comportant un dispositif de protection neutronique situé à l'intérieur d'une paroi (6) placée à la partie supérieure du corps d'assemblage (4), caractérisé en ce que le dispositif de protection neutronique comporte au moins un récipient (7), au moins partiellement rempli d'un produit absorbant les neutrons, maintenu à l'aide d'au moins une plaque entretoise (9), l'ensemble constitué par le récipient (7) et les plaques entretoises (9) étant situé à l'intérieur de ladite paroi (6).

2. Assemblage de réacteur nucléaire selon la revendication 1, caractérisé en ce que le récipient 7 comporte de l'extérieur vers l'intérieur :

une enveloppe cylindrique externe (34) fermée à ses deux extrémités,

une enveloppe cylindrique interne (36) de faible épaisseur, incomplètement remplie d'un produit absorbant les neutrons, et

un tube déformable (37) disposé au centre de l'enveloppe interne (36) et sensiblement le long de son axe.

3. Assemblage de réacteur nucléaire selon l'une quelconque des revendications 1 ou 2, caractérisé en ce que chaque plaque entretoise (9) comprend un bord extérieur (24) dont au moins une partie (26) est sensiblement rectiligne et fixée contre la face interne de la paroi (6) et un bord intérieur (20) dont au moins une partie (22) épouse la forme du récipient (7).

4. Assemblage de réacteur selon la revendication 3, caractérisé en ce que le bord extérieur (24) de chaque plaque entretoise comporte, dans sa partie supérieure, une portion (10) inclinée de haut en bas vers l'extérieur de l'espace délimité par la paroi (6), et une encoche (16) s'ouvrant vers l'extérieur dudit espace et permettant l'accrochage du dispositif par un appareil de manutention.

5. Assemblage de réacteur nucléaire selon la revendication 3, caractérisé en ce que le bord intérieur (40) de chaque plaque entretoise comporte, dans sa partie supérieure, une portion (50) inclinée de haut en bas vers l'intérieur de l'espace délimité par la paroi (6), et une encoche (46) s'ouvrant vers l'intérieur dudit espace et permettant l'accrochage du dispositif par un appareil de manutention.

6. Assemblage de réacteur nucléaire selon l'une quelconque des revendications 1 à 5, caractérisé en ce que les plaques entretoises (9) sont constituées par des tôles embouties, microcoulées ou matricées à chaud.

7. Assemblage de réacteur nucléaire selon l'une quelconque des revendications 1 à 6, caractérisé en ce que lesdites plaques entretoises (9), une fois disposées autour du récipient (7), sont rendues solidaires entre elles à leur partie supérieure (28) et/ou à leur partie inférieure (11).

8. Assemblage de réacteur nucléaire selon l'une quelconque des revendications 1 à 7, caractérisé en ce que les plaques entretoises (9) comportent un système anti-vibrations.

9. Assemblage de réacteur nucléaire selon la revendication 8, caractérisé en ce que ledit système anti-vibrations comporte des fentes (17) pratiquées dans la partie inférieure (11) et/ou supérieure (28) des plaques entretoises (9).

10. Assemblage de réacteur nucléaire selon l'une quelconque des revendications 1 à 9, caractérisé en ce que les plaques entretoises (9) sont fixées à la paroi (6) placée à la partie supérieure du corps d'assemblage (4) à l'aide de clous (12) à tête soudée.

11. Assemblage de réacteur nucléaire selon la revendication 1, caractérisé en ce que les plaques entretoises (9) sont fixées à la paroi (6) au moyen de coins profilés (30).

12. Assemblage de réacteur nucléaire selon la revendication 1, caractérisé en ce que les plaques entretoises (9) sont fixées à la paroi (6) au moyen de déformations localisées de cette paroi (6) pénétrant dans des encoches préalablement ménagées dans les plaques entretoises (9).

13. Assemblage de réacteur nucléaire selon la revendication 1, caractérisé en ce que les plaques entretoises (9) sont fixées à la paroi (6) à l'aide d'au moins une bride (15) maintenue sur ladite paroi par soudure.

14. Assemblage de réacteur nucléaire selon la revendication 1, caractérisé en ce qu'il comporte plusieurs récipients (7a, 7b, 7c) au moins partiellement remplis d'un produit absorbant les neutrons, chacun des récipients (7a) étant maintenu par une seule plaque entretoise (9a).

**Claims**

1. Nuclear reactor assembly comprising a neutron shield located within a wall (6) placed above the assembly body (4), characterized in that the neutron shield comprises at least one vessel (7) at least partially filled with a neutron-absorbing material, supported by means of a bracing plate (9), the assembly comprised of a vessel (7) and the bracing plates (9) being located inside said wall (6).

2. Nuclear reactor assembly according to Claim 1, characterized in that the vessel (7) comprises in order beginning at the exterior:

a cylindrical external jacket (34) closed at its two ends,

a cylindrical internal jacket (36) of small thickness, incompletely filled with a neutron-absorbing material, and

a deformable tube (37) located in the centre of the internal jacket (36) and substantially longitudinally of its axis.

3. Nuclear reactor assembly according to either of Claims 1 and 2, characterized in that each bracing plate (9) comprises an external rim (24), at least a part (36) of which is substantially straight and is fixed against the internal surface of the wall (6) and an interior rim (20) at least a part (22) of which matches the form of the vessel (7).

4. Reactor assembly according to Claim 3, characterized in that the external rim (24) of each bracing plate comprises, in its upper part, a portion (10) downwardly inclined towards the exterior of the space delimited by the wall (6), and a slot (16) opening towards the exterior of said space and permitting engagement by a manipulation device.

5. Nuclear reactor assembly according to Claim 3, characterized in that the internal rim (40) of said bracing plate comprises, at its upper end, a portion (50) downwardly inclined towards the interior of the space delimited by the wall (6), and a slot (46) opening towards the interior of said space and permitting engagement of the apparatus by a manipulation device.

6. Nuclear reactor assembly according to any one of Claims 1 to 5, characterized in that the bracing plates (9) comprise stamped, cast or die-cast plates.

7. Nuclear reactor assembly according to any one of Claims 1 to 6, characterized in that said bracing plates (9), once fixed around the vessel (7), are fastened together at their upper parts (28) and/or their lower parts (11).

8. Nuclear reactor assembly according to any one of Claims 1 to 7, characterized in that the bracing plates (9) comprise an anti-vibration system.

9. Nuclear reactor assembly according to Claim 8, characterized in that said anti-vibration system comprises slits (17) formed in the lower parts (11) and/or the upper parts (28) of the bracing plates (9).

10. Nuclear reactor assembly according to any one of Claims 1 to 9, characterized in that the bracing plates (9) are fixed to the wall (6) located at the upper part of the assembly body (4) by means of studs with welded heads.

11. Nuclear reactor assembly according to Claim 1, characterized in that the bracing plates (9) are fixed to the wall (6) by means of shaped keys (30).

12. Nuclear reactor assembly according to Claim 1, characterized in that the bracing plates (9) are fixed to the wall (6) by means of local deformations of said wall (6) extending into previously-formed slots in the bracing plates (9).

13. Nuclear reactor assembly according to Claim 1, characterized in that the bracing plates (9) are fixed to the wall (6) by means of at least one collar (15) held on said wall by welding.

14. Nuclear reactor assembly according to Claim 1, characterized in that it comprises a plurality of vessels (7a, 7b, 7c) at least partially filled with a neutron-absorbing material, each of the vessels (7a) being supported by a single bracing plate (9a).

**Patentansprüche**

1. Brennstabbündel für einen Kernreaktor mit einer Neutronenabschirmung, die innerhalb einer Wand (6) im oberen Teil des Brennstabbündelkörpers (4) angeordnet ist, dadurch gekennzeichnet, daß die Neutronenabschirmung wenigstens einen Behälter (7) umfaßt, der wenigstens teilweise mit einem Neutronen absorbierenden Stoff gefüllt und mittels wenigstens einer Abstandsplatte (9) gehalten ist, wobei die aus dem Behälter (7) und den Abstandsplatten (9) gebildeter Einheit innerhalb der Wand (6) angeordnet ist.

2. Brennstabbündel für einen Kernreaktor nach Anspruch 1, dadurch gekennzeichnet, daß der Behälter (7) von außen nach innen umfaßt :
   einen zylindrischen, an seinen beiden Enden geschlossenen, äußeren Mantel (34),
   einen zylindrischen, inneren Mantel (36) geringer Dicke, der unvollständig mit einem Neutronen absorbierenden Stoff gefüllt ist, und
   ein verformbares Rohr (37), welches in der Mitte des inneren Mantels (36) und im wesentlichen längs der Achse angeordnet ist.

3. Brennstabbündel für einen Kernreaktor nach Anspruch 1 oder 2, dadurch gekennzeichnet, daß jede Abstandsplatte (9) einen äußeren Rand (24), bei dem wenigstens ein Abschnitt (26) im wesentlichen gradlinig und an der Innenseite der Wand (6) befestigt ist, und einen inneren Rand (20) aufweist, von dem wenigstens ein Abschnitt (22) an die Form des Behälters (7) angepaßt ist.

4. Brennstabbündel für einen Kernreaktor nach Anspruch 3, dadurch gekennzeichnet, daß der äußere Rand (24) einer jeden Abstandsplatte in seinem oberen Teil einen von oben nach unten zum Äußeren des von der Wand (6) begrenzten Raumes abgeschrägten Bereich (10) und eine Ausnehmung (16) aufweist, die sich zum Äußeren dieses Raumes öffnet und das Erfassen der Abschirmung mit einer Handhabungsvorrichtung ermöglicht.

5. Brennstabbündel für einen Kernreaktor nach Anspruch 3, dadurch gekennzeichnet, daß der innere Rand (40) einer jeden Abstandsplatte an seinem oberen Abschnitt einen von oben nach unten zum Äußeren des durch die Wand (6) begrenzten Raumes hin abgeschrägten Bereich (50) und eine Ausnehmung (46) aufweist, die sich zum Inneren dieses Raumes öffnet und das Erfassen der Abschirmung mit einer Handhabungsvorrichtung ermöglicht.

6. Brennstabbündel für einen Kernreaktor nach irgendeinem der Ansprüche 1-5, dadurch gekennzeichnet, daß die Abstandsplatten (9) aus getieften, mikrogegossenen oder warmgetriebenen Blechen gebildet sind.

7. Brennstabbündel für einen Kernreaktor nach irgendeinem der Ansprüche 1-6, dadurch gekennzeichnet, daß die Abstandsplatten (9), nachdem sie um den Behälter (7) herum angeordnet sind, an ihrem oberen Abschnitt (28) und/oder ihrem unteren Abschnitt (11) miteinander fest verbunden sind.

8. Brennstabbündel für einen Kernreaktor nach irgendeinem der Ansprüche 1-7, dadurch gekennzeichnet, daß die Abstandsplatten (9) ein schwingungsdämpfendes System aufweisen.

9. Brennstabbündel für einen Kernreaktor nach Anspruch 8, dadurch gekennzeichnet, daß das schwingungsdämpfende System Schlitze (17) umfaßt, die in dem unteren Abschnitt (11) und/oder dem oberen Abschnitt (28) der Abstandsplatten (9) ausgebildet sind.

10. Brennstabbündel für einen Kernreaktor nach irgendeinem der Ansprüche 1-9, dadurch gekennzeichnet, daß die Abstandsplatten (9) an der Wand (6), die am oberen Teil des Körpers des Brennstabes (4) angeordnet ist, mit Hilfe von Nägeln (12) mit verschweißtem Kopf befestigt sind.

11. Brennstabbündel für einen Kernreaktor nach Anspruch 1, dadurch gekennzeichnet, daß die Abstandsplatten (9) an der Wand (6) mittels Profilkeile (30) befestigt sind.

12. Brennstabbündel für einen Kernreaktor nach Anspruch 1, dadurch gekennzeichnet, daß die Abstandsplatten (9) an der Wand (6) mittels örtlicher Verformungen dieser Wand (6) befestigt sind, die in vorhergehend in den Abstandsplatten (9) ausgebildete Ausnehmungen eindringen.

13. Brennstabbündel für einen Kernreaktor nach Anspruch 1, dadurch gekennzeichnet, daß die Abstandsplatten (9) an der Wand (6) mittels wenigstens eines Bügels (19) befestigt sind, der an der Wand durch Schweißen gehalten ist.

14. Brennstabbündel für einen Kernreaktor nach Anspruch 1, dadurch gekennzeichnet, daß er mehrere Behälter (7a, 7b, 7c) umfaßt, die wenigstens teilweise mit einem Neutronen absorbierenden Stoff gefüllt sind, wobei jeder der Behälter (7a) durch nur eine Abstandsplatte (9a) gehalten ist.

FIG. 1

FIG. 2

FIG. 3

16

9

7

32

33

FIG. 4

37

48

50

46

8

47

34

40

36

39

7

45

44

42

FIG. 5

FIG. 6

FIG. 8

FIG. 7

4

FIG.9